# EUROPÄISCHE PATENTSCHRIFT

(11) **EP 1 754 957 B1**
(45) Veröffentlichungstag und Bekanntmachung des Hinweises auf die Patenterteilung: **15.04.2009**
(21) Anmeldenummer: 06117199.7
(22) Anmeldetag: 14.07.2006
(51) Int. Cl.: G01F 1/64

(54) **Vorrichtung zur triboelektrischen Massenstrommessung in fluiden Medien**
Device for triboelectric mass flow measurement in fluid media
Dispositif de mesure du débit massique triboélectrique dans des milieux liquides

(30) Priorität: 19.08.2005 DE 102005039290
(43) Veröffentlichungstag der Anmeldung: 21.02.2007
(73) Patentinhaber: ROBERT BOSCH GMBH, 70442 Stuttgart (DE)
(72) Erfinder: Gangi, Marco, 73734, Esslingen (DE); Schulz, Udo, 71665, Vaihingen/Enz (DE); Proepper, Thomas, 72762, Reutlingen (DE)

(56) Entgegenhaltungen:
- EP-A- 0 274 768
- DE-A1- 2 229 703
- DE-B- 1 195 960
- US-A- 4 363 244
- US-A- 5 022 274

## Beschreibung

Es wird ein Verfahren und eine Vorrichtung zur Messung von Massenströmen fluider Medien unter Ausnutzung eines triboelektrischen Messprinzips vorgeschlagen. Derartige Vorrichtungen und Verfahren lassen sich insbesondere zur Bestimmung von Massenströmen von Kraftstoffen in Kraftstoff-Einspritzsystemen für Verbrennungskraftmaschinen, beispielsweise in der Kraftfahrzeugtechnik, einsetzen.

### Stand der Technik

Bei vielen Prozessen, beispielsweise auf dem Gebiet der Verfahrenstechnik, der Chemie oder des Maschinenbaus, muss definiert eine Menge und/oder ein Strom eines fluiden Mediums, beispielsweise eines Gases oder einer Flüssigkeit, zugeführt werden. Insbesondere zählen hierzu Verbrennungsprozesse, welche unter geregelten Bedingungen ablaufen müssen. Ein wichtiges Beispiel ist dabei die Verbrennung von Kraftstoff in Verbrennungskraftmaschinen, insbesondere in der Kraftfahrzeugtechnik.

Aus dem Stand der Technik sind zahlreiche Verfahren und Vorrichtungen bekannt, nach denen ein Massenstrom und/oder eine Strömungsgeschwindigkeit fluider Medien bestimmt werden kann. So wird beispielsweise zur Bestimmung der Strömungsgeschwindigkeit leitfähiger Flüssigkeiten in hydraulischen Strömungsanlagen unter anderem ein nach dem elektromagnetischen Induktionsprinzip arbeitenden Messverfahren eingesetzt. Diese Technik kommt vor allem in elektrisch nicht leitenden Strömungsrohren aus Kunststoff oder Keramik zum Einsatz, da metallische Wände von Strömungsrohren durch induzierte Wirbelströme die technische Anwendung des Induktionsprinzips beeinträchtigen würden.

In Hochdruckeinspritzsystemen von Diesel- und Ottomotoren oder hydraulischen Aggregaten strömen elektrisch nicht leitfähige Fluide, insbesondere KohlenwasserstoffVerbindungen wie Öle und Kraftstoffe. Auf diese nicht oder nur geringfügig elektrisch leitfähigen Fluide ist das elektromagnetische Induktionsprinzip nicht anwendbar. Daher wird in Kraftstoffinjektoren zur Bestimmung der Kraftstoffmasse, eines Kraftstoffmassenstroms oder einer Strömungsgeschwindigkeit zum Zwecke einer Dosierung in der Regel ein empirisches Dosierverfahren eingesetzt. Dabei wird die zu dosierende Kraftstoffmasse beispielsweise über eine Variation der elektrischen Ansteuerdauer der Kraftstoffinjektoren eingestellt. Die Ansteuerdauer wird beispielsweise unter Berücksichtigung des Öffnungs- und Schließverhaltens des Kraftstoffinjektors unter Berücksichtigung des Kraftstoffdrucks (beispielsweise in einem Druckreservoir, Common Rail) und bekannter Kennfelder beziehungsweise Kennlinien eines elektronischen Steuergeräts eingestellt. Mittels entsprechender Lemverfahren wird der Einfluss herstellungsbedingter Streuungen, Alterseffekte und Driften auf die eingestellte Kraftstoffmenge reduziert (zum Beispiel mittels einer sogenannten Nullmengenkalibrierung).

Bei dem beschriebenen Verfahren ist es erforderlich oder wünschenswert, das Öffnen und/oder Schließen des Kraftstoffinjektors unmittelbar zu erfassen. So existieren Verfahren, bei welchen das Öffnungs- und/oder Schließverhalten des Kraftstoffinjektors dadurch überwacht wird, dass die Bewegung eines Einspritzventilglieds (beispielsweise einer Düsennadel) unmittelbar erfasst wird. So kann beispielsweise eine Bewegung des Einspritzventilglieds mittels einer Strommessung infolge einer Veränderung der Induktivität einer Injektorspule des Kraftstoffinjektors infolge der Bewegung des Einspritzventilglieds eingesetzt werden. In Kraftstoffinjektoren mit Piezoaktoren können die sensorischen Eigenschaften einer Piezokeramik zur Detektierung von Rückwirkungen infolge der Bewegung des Einspritzventilglieds und/oder infolge einer Bewegung des Steuerventils zur Bestimmung des Öffnens und/oder Schließens des Kraftstoffinjektors genutzt werden. Auf diese Weise kann unter Ausnutzung dieser Öffnungs- und/oder Schließinformationen die tatsächliche Ansteuerdauer bis hin zur gewünschten Ansteuerdauer korrigiert werden. In der Regel wird indirekt über eine Systemreaktion der Verbrennungskraftmaschine (zum Beispiel über eine Drehzahl, ein Drehmoment, eine Beschleunigung oder ähnliches) und/oder einen Druck im Kraftstoffspeicher (zum Beispiel Common Rail) und/oder einen Druck in Zuleitungen der Kraftstoffinjektoren auf die tatsächlich eingespritzte Kraftstoffmenge geschlossen.

Diese indirekten Messverfahren zur Dosierung einer Kraftstoffmasse beziehungsweise zur Bestimmung eines Kraftstoffmassenstroms und/oder einer Kraftstoffgeschwindigkeit sind jedoch in der Praxis mit erheblichen Ungenauigkeiten behaftet. Wünschenswert wäre daher eine direkte und genaue Bestimmung eines Kraftstoffmassenstroms beziehungsweise einer Kraftstoffgeschwindigkeit in einem Strömungskanal unmittelbar oder in der Nähe einer Düsenöffnung eines Kraftstoffinjektors. Derartige Verfahren zur genauen und injektorspezifischen Messung einer eingespritzten Kraftstoffinasse, insbesondere in unmittelbarer Umgebung der Einspritzdüsen von Verbrennungskraftmaschinen, sind jedoch bislang nicht bekannt.

Aus anderen Bereichen der Technik, insbesondere der chemischen Verfahrenstechnik sind jedoch Sensoren bekannt, mit welchen Gasmassenströme gemessen werden können. So fenbart US 3,359,796 einen Sensor zur Messung eines Massenstroms einer Suspension elektrostatisch geladener Feststoffpartikel in einem Gas. Bei den Feststoffpartikeln kann es sich beispielsweise um Glas- oder Magnesiapartikel handeln. Der Sensor umfasst eine Metallkugel, welche in den Massenstrom hineinragt und welche durch Kollision mit den Feststoffpartikeln infolge von Reibungseffekten elektrisch aufgeladen wird. Diese elektrische Aufladung kann gemessen werden, und es kann daraus der Gasmassenstrom bestimmt werden.

Auch EP 0 198 920 B1 offenbart eine Vorrichtung zur Flussmessung eines Gases, welches Feststoffpartikel aufweist. Analog zu US 3,359,796 verwendet auch EP 0 198 920 B1 einen als metallische Mono-Elektrode ausgestalteten Sensor, welcher durch Reibung der Feststoffpartikel im Gasmassenstrom elektrisch aufgeladen wird. EP 0 198 920 B 1 schlägt dabei insbesondere ein geeignetes elektronisches Messverfahren vor, mittels dessen diese Aufladungen der Elektrode erfasst werden können.

DE 692 21 737 T2 und DE 694 03 205 T2 offenbaren Verfahren und Vorrichtungen zum Nachweis beziehungsweise zur Überwachung von Teilchen in einem Gasstrom. Beispielsweise kann es sich dabei um Teilchen im Gasstrom in einem Kamin handeln, beispielsweise zur kontinuierlichen Messung unerwünschter Teilchenemissionen aus Kaminen und Entstaubungsanlagen. Wiederum basieren diese Druckschriften auf der Verwendung einer Mono-Elektrode, welche in diesen Fällen als Messfühler ausgestaltet ist, welcher einen leitfähigen Stab einschließt. Dieser leitfähige Stab ragt in den Kamin beziehungsweise den Gasmassenstrom und wird durch die Feststoffpartikel im Gasmassenstrom triboelektrisch aufgeladen. Dabei offenbart DE 692 21 737 T2 ein Verfahren, bei welchem zur Erfassung dieser Aufladung nicht der Absolutwert der Aufladung, sondern ein Wechselanteil eines Aufladungssignals ausgewertet wird. In DE 694 03 205 T2 wird die Vorrichtung der DE 692 21 737 T2 dahingehend weitergebildet, dass der Messfühler, welcher in die Teilchenströmung hineinragt, zusätzlich mit einer isolierenden Schicht überzogen wird, welche insbesondere Kriechströme zwischen Messfühler und Rohrwand verhindern soll.

Diese aus dem Stand der Technik bekannten Vorrichtungen und Verfahren weisen jedoch für den Einsatz zur Massenstrombestimmung vieler fluider Medien verschiedene Nachteile auf. So handelt es sich, wie oben beschrieben, bei allen bekannten Messfühlern um Mono-Elektroden, welche insgesamt nur sehr schwache Ausgangssignale liefern. Zudem ist das Messprinzip dieser bekannten Vorrichtungen darauf angewiesen, dass in den Gasströmen Feststoffpartikel enthalten sind, beispielsweise Glaspartikel, welche zu einer elektrischen Aufladung der Sensoren führen. Beispielsweise bei der Messung von Kraftstoffströmen ist dies jedoch nicht gegeben, so dass derartige Messfühler hier nicht einsetzbar sind. Ein weiterer Nachteil der Verwendung von Mono-Elektroden besteht darin, dass bei derartigen Vorrichtungen häufig Kriechströme zwischen den Messelektroden und einer Strömungswand auftreten können. Insbesondere tritt dieser Effekt ein, wenn die zu messenden fluiden Medien verunreinigt sind und sich Verunreinigungen im Bereich der Messfühler ablagern. Weiterhin ist in vielen Fällen eine statische Aufladung der eingesetzten Mono-Elektroden zu verzeichnen, was in der Regel aufwendige Auswerteschaltungen erforderlich macht. Dies tritt erschwerend zu der Tatsache hinzu, dass die bekannten Vorrichtungen ohnehin nur schwache Signale liefern und nur mit stark wirkenden Strömungsmedien, insbesondere Gasströmen mit Festkörperpartikeln, einsetzbar sind.

Ein Massenstrommesser mit den Merkmalen des Oberbegriffs des Anspruch 1 ist aus der deutschen Auslegeschrift DE 11 95 960 B bekannt. Dieses Dokument offenbart einen Durchflussmesser für strömende, elektrisch schlecht oder nicht leitende Flüssigkeiten, der eine Rohrwandung aufweist, an der eine Messelektrode aus nicht leitendem Material und eine Bezugselektrode mit konstantem, definierten Bezugspotential angeordnet ist. Die Bezugselektrode ist in einem Behältnis mit Flüssigkeitsfüllung angeordnet, das nur über ein Diaphragma mit der in der Rohrwandung strömenden Flüssigkeit elektrisch verbunden ist, und wird daher von der in der Rohrwandung strömenden Flüssigkeit nicht überströmt. Die Messelektrode wird durch Reibungsvorgänge elektrostatisch aufgeladen. Der Durchflussmesser weist ein Messgerät auf, das die Potentialdifferenz zwischen Messpotential und dem konstanten Bezugspotential anzeigt.

### Vorteile der Erfindung

Es wird ein Massenstrommesser zur Messung eines Massenstroms eines fluiden Mediums vorgeschlagen, welcher die Nachteile der aus dem Stand der Technik bekannten Massenstrommesser vermeidet. Weiterhin wird eine Verwendung eines erfindungsgemäßen Massenstrommessers zur Messung und/oder Steuerung eines Kraftstoffstromes zu mindestens einem Einspritzventil zum Einspritzen von Kraftstoff in einen Brennraum einer Verbrennungskraftmaschine vorgeschlagen. Der Massenstrommesser ist zur Messung von Massenströmen und/oder Geschwindigkeiten der meisten bekannten fluiden Medien auf nahezu allen Gebieten der Technik und Naturwissenschaften sowie der Medizintechnik einsetzbar. Insbesondere steht dabei jedoch der Einsatz zur Messung eines Kraftstoffstroms zum Brennraum einer Verbrennungskraftmaschine im Vordergrund.

Unter einem "fluiden Medium" soll dabei eine Flüssigkeit oder ein Gas verstanden werden. Auch Mischungen verschiedener Flüssigkeiten, Gase oder Flüssigkeiten und Gase sind denkbar. Weiterhin sind auch Mischungen mit Feststoffen, beispielsweise Suspensionen, denkbar. Unter "Mischungen" können dabei sowohl homogene als auch inhomogene Mischungen verstanden werden. Insbesondere ist der vorgeschlagene Massenstrommesser zur Messung eines Massenstroms und/oder einer Strömungsgeschwindigkeit eines fluiden Mediums mit dielektrischen Eigenschaften geeignet. Dies bedeutet, dass es sich bei dem fluiden Medium insbesondere um ein nichtleitendes Medium handeln sollte. Es sind jedoch auch Messungen an zumindest leicht leitfähigen Medien möglich, beispielsweise an Wasser, beispielsweise Wasser und wässrige Lösungen. In diesem Fall kann, wie unten beschrieben, der erfindungsgemäße Massenstrommesser sogar zur Bestimmung der Leitfähigkeit eingesetzt werden.

Das fluide Medium soll mit einer Hauptströmungsrichtung strömen. Was unter dem Begriff "Hauptströmungsrichtung" zu verstehen ist, hängt vom Einsatzort des erfindungsgemäßen Massenstrommessers ab. So kann es sich bei dem Massenstrom beispielsweise um eine laminare oder auch eine turbulente Strömung handeln, wobei eine laminare Strömung bevorzugt wird. Der Massenstrommesser kann auch in einem gekrümmten Leitungsrohr eingesetzt werden, so dass unter "Hauptströmungsrichtung" jeweils die Haupt-Transportrichtung des Massenstroms des fluiden Mediums am Ort des Massenstrommessers verstanden werden soll. Lokale Verwirbelungen können dabei in vielen Fällen vernachlässigt werden. Unter einem "Massenstrom" ist dabei insbesondere ein Massendurchsatz pro Zeiteinheit zu verstehen. Alternativ oder zusätzlich kann jedoch der Begriff "Massenstrom" auch auf eine Strömungsgeschwindigkeit reduziert werden, was die primär gemessene Größe darstellt. Weiterhin kann alternativ oder zusätzlich auch ein Volumenstrom subsummiert werden.

Der erfindungsgemäße Massenstrommesser weist mindestens eine erste Elektrode mit mindestens einem ersten Elektrodenmaterial und mindestens eine zweite Elektrode mit mindestens einem zweiten Elektrodenmaterial auf. Bei den Elektrodenmaterialien kann es sich um Reinstoffe oder auch um mehrere Materialien, beispielsweise homogene oder inhomogene Mischungen, handeln oder auch um Schichtaufbauten. Auch kann eine Elektrode aus mehreren Teilelektroden, beispielsweise Teilelektroden aus verschiedenen Materialien, zusammengesetzt sein. Die mindestens eine erste Elektrode und die mindestens eine zweite Elektrode sollen dabei zumindest teilweise von dem fluiden Medium überströmt werden, insbesondere beispielsweise dergestalt, dass eines oder mehrere der genannten Elektrodenmaterialien vom fluiden Medium überströmt werden. Beispielsweise können die genannten Elektroden ganz oder teilweise in ein Strömungsrohr integriert werden, wobei sinngemäß auch das Strömungsrohr als eine der mindestens zwei Elektroden fungieren kann. Von Vorteil ist es, wenn jede Elektrode mindestens ein elektrisch leitfähiges Elektrodenmaterial aufweist, wobei jedoch sinngemäß auch nicht-leitfähige Elektrodenmaterialien eingesetzt werden können. Insbesondere kann beispielsweise eine elektrisch leitfähige Elektrode mit einer elektrisch nicht-leitfähigen Schicht eines weiteren Elektrodenmaterials überzogen werden, beispielsweise eine Stahlelektrode mit einer Teflonschicht. Auch andere Kombinationen sind denkbar.

Ein Grundgedanke der vorliegenden Erfindung besteht in einer Ausnutzung einer elektrischen Ladungstrennung durch Strömungsreibung (Tribologie) fließender fluider Medien. Zu diesem Zweck werden erfindungsgemäß die Elektrodenmaterialien derart gewählt, dass das mindestens eine erste Elektrodenmaterial und das mindestens eine zweite Elektrodenmaterial unterschiedliche Stellungen in der tribologischen Reihe einnehmen. Sinngemäß kann dabei, wenn es sich - wie oben beschrieben - um Komposit-Elektroden handelt, eine Elektrode konstruiert werden, bei welcher diese Bedingung jeweils für mindestens eines der Elektrodenmaterialien erfüllt ist, und zwar vorzugsweise ein Elektrodenmaterial, welches in direktem Kontakt mit der Strömung steht. Eine unterschiedliche Stellung in der tribologischen Reihe bedeutet insbesondere, dass die Fähigkeit der Elektrodenmaterialien, gegenüber dem strömenden fluiden Medium infolge tribologischer Effekte als elektrischer Donator oder Akzeptor zu wirken, unterschiedlich ist. So kann beispielsweise die mindestens eine erste Elektrode derart beschaffen sein, dass diese ein Material aufweist, was aufgrund seiner Material- und Oberflächeneigenschaften derart beschaffen ist, dass es gegenüber dem strömenden fluiden Medium als triboelektrischer Donator wirkt. Die andere Elektrode kann dann so beschaffen sein, dass diese mindestens ein Elektrodenmaterial aufweist, welches entsprechend als triboelektrischer Akzeptor wirkt. Alternativ können auch beide Elektrodenmaterialien als unterschiedlich starke Donatoren oder als unterschiedlich starke Akzeptoren wirken. Unter einem Donator ist dabei ein Material zu verstehen, welches dem strömenden fluiden Medium durch Strömungsreibung Elektronen hinzufügt. Entsprechend ist ein Akzeptor ein Material, welches dem strömenden fluiden Medium Elektronen entzieht. Derartige Effekte und die triboelektrische Reihe sind beispielsweise in L. Bergmann, C. Schaefer: Lehrbuch der Experimentalphysik, Band 2, Elektromagnetismus, de Gruyter Berlin, 8. Auflage 1999, Seite 770, beschrieben. Dementsprechend werden die mindestens zwei Elektroden somit durch das strömende fluide Medium unterschiedlich elektrisch aufgeladen. Der Massenstrommesser weist entsprechend weiterhin mindestens eine Ladungserfassungsvorrichtung auf, welche diese elektrischen Ladungsunterschiede zwischen der mindestens einen ersten Elektrode und der mindestens einen zweiten Elektrode erfassen kann.

Der Ladungsunterschied zwischen der mindestens einen ersten Elektrode und der mindestens einen zweiten Elektrode kann, wie oben beschrieben, dadurch entstehen, dass diese Elektroden mit dem strömenden fluiden Medium auf unterschiedliche Weise wechselwirken und dementsprechend eine unterschiedliche Aufladung erfahren. Dieser Ladungsunterschied kann mittels der mindestens einen Ladungserfassungsvorrichtung, welche unten näher beschrieben wird, gemessen werden. Alternativ oder zusätzlich zu einer unterschiedlichen Aufladung kann auch eine elektrische Rekombination stattfinden. So kann beispielsweise das fließende fluide Medium an der mindestens einen ersten Elektrode elektrisch aufgeladen werden, wobei diese Ladungen von einer wandnahen Medienströmung mitgenommen werden und schließlich an der mindestens einen zweiten Elektrode rekombinieren. Die mindestens eine zweite Elektrode wirkt dann als Rekombinationselektrode, wobei der Rekombinationsstrom durch die Ladungserfassungsvorrichtung registriert wird. Auch eine umgekehrte Wirkung, bei der beispielsweise die mindestens eine erste Elektrode als Rekombinationselektrode wirkt, ist möglich und hängt insbesondere von der lokalen Anordnungen der mindestens zwei Elektroden ab.

Der Ladungsunterschied zwischen der mindestens einen ersten Elektrode und der mindestens einen zweiten Elektrode, welcher auf die beschriebenen Effekte zurückzuführen ist, beziehungsweise eine elektrische Aufladung der mindestens zwei Elektroden pro Zeiteinheit, korreliert direkt mit dem Massenstrom des fluiden Mediums. So kann die mindestens eine Ladungserfassungsvorrichtung beispielsweise eine Strommessvorrichtung zur Erfassung mindestens eines Stromes zwischen der mindestens einen ersten Elektrode und der mindestens einen zweiten Elektrode aufweisen, wobei der mindestens eine Strom in der Regel direkt mit dem lokalen wandnahen Massenstrom des fluiden Mediums korreliert. Ist beispielsweise die Strömung des fluiden Mediums überwiegend laminar, so lässt sich aus dem Ladungsstrom bei bekanntem Strömungsprofil (zum Beispiel in kreiszylindrischen Strömungskanälen) aus dem mindestens einen Strom (z. B. in Ampere) der Gesamtmassenstrom (z. B. in kg/s) ableiten. Neben einer analytischen Berechnung des Massenstroms des fluiden Mediums unmittelbar aus dem mindestens einen gemessenen Strom kommt auch eine Kalibration mittels eines empirischen Verfahrens in Frage.

Weitere vorteilhafte Ausgestaltungen und Weiterbildungen der Erfindung beziehen sich insbesondere auf Anordnungen und Ausgestaltungen der mindestens zwei Elektroden sowie auf Vorrichtungen oder Verfahren zur Erfassung der unterschiedlichen Aufladung der Elektroden. So lassen sich die mindestens zwei Elektroden beispielsweise derart ausgestalten, dass die mindestens eine erste Elektrode und die mindestens eine zweite Elektrode durch mindestens ein triboelektrisch neutrales Material voneinander getrennt sind. Auf diese Weise wird insbesondere verhindert, dass eine zusätzliche Aufladung des fluiden Mediums zwischen der mindestens einen ersten Elektrode und der mindestens einen zweiten Elektrode erfolgt. Weiterhin lassen sich die Elektrodenmaterialien derart wählen, dass das mindestens eine erste Elektrodenmaterial und das mindestens eine zweite Elektrodenmaterial in entgegengesetzte triboelektrische Polarität gegenüber dem fluiden Medium aufweisen. So kann eines dieser mindestens zwei Elektrodenmaterialien als Donator gegenüber dem fluiden Medium wirken, das andere als Akzeptor. Auf diese Weise lässt sich die unterschiedliche Aufladung der mindestens zwei Elektroden und somit ein Messsignal des Massenstrommessers maximieren.

Weiterhin lassen sich die Elektroden bezüglich der Hauptströmungsrichtung des fluiden Mediums in einer Reihe anordnen. So kann beispielsweise mindestens eine Elektrode ("Stromaufwärts-Elektrode") aus der mindestens einen ersten Elektrode stromaufwärts bezüglich der Hauptströmungsrichtung zu mindestens einer Elektrode ("Stromabwärts-Elektrode") aus der mindestens einen zweiten Elektrode angeordnet sein. Sinngemäß ist auch eine umgekehrte Anordnung möglich. Mit dieser Reihenanordnung lassen sich, wie unten beschrieben, insbesondere Laufzeitmessungen zuverlässig durchführen. Auch macht sich die oben beschriebene Rekombinationswirkung mit dieser Elektrodenanordnung besonders zweckmäßig bemerkbar. Neben dieser Reihenanordnung können natürlich auch weitere Elektroden in anderen Anordnungen vorgesehen sein. Bei der beschriebenen Reihenanordnung ist es insbesondere von Vorteil, wenn die mindestens eine Stromabwärts-Elektrode weiter in den Strömungskanal hineinragt als die mindestens eine Stromaufwärts-Elektrode. Dies begünstigt den Verlauf der elektrischen Feldlinien, welche beispielsweise parallel zu den Strömungslinien des fluiden Mediums in diesem Bereich gewählt werden können. Weiterhin kann eine Ladungsübertragung zwischen dem fluiden Medium und den mindestens zwei Elektroden durch eine elektrische Vorspannung unterstützt werden. So kann die mindestens eine Ladungserfassungsvorrichtung mindestens eine Vorspannungseinrichtung auf weisen, wobei die mindestens eine Vorspannungseinrichtung ausgestaltet ist, um mindestens eine Vorspannung zwischen der mindestens einen ersten Elektrode und der mindestens einen zweiten Elektrode zu generieren.

Weiterhin lässt sich der Massenstrommesser, insbesondere unter Verwendung der beschriebenen Reihenschaltung der Elektroden, vorteilhaft als Laufzeitanordnung ausgestalten. Zu diesem Zweck weist die mindestens eine Ladungserfassungsvorrichtung beispielsweise mindestens eine Pulsvorrichtung zur Beaufschlagung der mindestens einen ersten Elektrode und/oder der mindestens einen zweiten Elektrode mit einer zeitlich veränderlichen Spannung, insbesondere einer Pulsspannung, auf. Mittels einer Laufzeitmessungsvorrichtung kann eine zeitliche Veränderung des Ladungsunterschiedes zwischen der mindestens einen ersten Elektrode und der mindestens einen zweiten Elektrode erfasst werden. Beispielsweise kann diese zeitliche Veränderung des Ladungsunterschieds in einer zeitlichen Veränderung eines Stromes zwischen den mindestens zwei Elektroden gemessen werden.

Weiterhin kann die mindestens eine erste Elektrode und die mindestens eine zweite Elektrode, alternativ oder zusätzlich zur oben beschriebenen Reihenanordnung, eine Kondensatoranordnung aufweisen. Zu diesem Zweck können die mindestens eine erste Elektrode und die mindestens eine zweite Elektrode (beziehungsweise sinngemäß jeweils eine erste Elektrode und eine zweite Elektrode) in mindestens einer Kondensatoranordnung, insbesondere einer Plattenkondensatoranordnung und/oder einer Zylinderkondensatoranordnung, angeordnet sein. Beispielsweise kann die Plattenkondensatoranordnung mit zur Hauptströmungsrichtung parallelen Plattenoberflächen ausgestaltet sein. Analog kann die Zylinderkondensatoranordnung mit zur Hauptströmungsrichtung paralleler Zylinderachse ausgestaltet sein. Auch andere Kondensatoranordnungen sind denkbar. Aufgrund der unterschiedlichen triboelektrischen Eigenschaften, vorzugsweise unterschiedlicher triboelektrischer Polaritäten gegenüber dem fluiden Medium, ruft die Strömungsreibung des fluiden Mediums an den Elektroden wiederum eine direkt mit der Massenströmung korrelierte elektrische Spannung an der Kondensatoranordnung hervor. Eine Rekombination der auf der Kondensatoranordnung sich bildenden Ladungen kann beispielsweise über eine äußere elektrische Beschaltung stattfinden und/oder auch durch einen Ladungsstrom innerhalb des fluiden Mediums, sofern dieses leichte leitfähige Eigenschaften aufweist.

Der vorgeschlagene Massenstrommesser weist gegenüber den aus dem Stand der Technik bekannten Vorrichtungen zahlreiche Vorteile auf. So lässt sich das Erfindungsprinzip für nahezu alle bedeutsame fluide Medien wie beispielsweise Wasser, Hydrauliköle, Kraftstoffe, kolloidale Flüssigkeiten oder auch technische Gase einsetzen, da sich auf der tribologischen Reihe nahezu immer geeignete Elektrodenmaterialien mit den erwünschten triboelektrischen Akzeptor- oder Donatoreigenschaften finden lassen. So bieten sich als geeignete Elektrodenwerkstoffe beispielsweise Stahl, Aluminium, Teflon (unter Umständen, wie oben beschrieben, als dünne Beschichtungen auf leitfähigen Elektroden) an, welche gegenüber den fluiden Medien als triboelektrische Donatoren oder Akzeptoren wirken. Besonders effizient erfolgt eine triboelektrische Ladungstrennung in Hochdruckanlagen, beispielsweise in Kraftstoffinjektoren, in welchen die fluiden Medien unter hohem Druck (zum Teil über 1000 bar) durch geeignete Strömungsrohre oder Strömungskanäle strömen. Die durch hohen Druck und Reibungsverluste bei hohen Strömungsgeschwindigkeiten hervorgerufene Temperaturerhöhung verstärkt die triboelektrische Ladungstrennung.

Weiterhin ist die Wirkungsweise des Massenstrommessers trägheitslos und direkt, und es werden Ladungsströmungen in unmittelbarer Umgebung der Elektroden direkt mit der Massenströmung des fluiden Mediums korreliert, welche derart in ein elektrisches Signal umgewandelt wird. Diese elektrischen Signale lassen sich unmittelbar oder nach einer geeigneten elektrischen Umwandlung beispielsweise in einem Motorsteuerungsgerät zur Motorsteuerung verwenden. Der Massenstrommesser arbeitet weiterhin ohne bewegliche Teile, so dass eine aufwendige Bearbeitung hydraulischer Komponenten mit hohen Genauigkeitsanforderungen nicht erforderlich ist. Die transportierte oder eingespritzte Flüssigkeitsmasse pro Zeiteinheit, beispielsweise in Verbrennungskraftmaschinen, wird schnell und zuverlässig erfasst, so dass sich auch veränderliche Strömungsverhältnisse wie Druckstöße in öffnenden oder schließenden Hochdruck-Einspritzventilen sowie eine hochfrequente Druckwellendynamik zeitlich hochaufgelöst erfassen lässt. Auf diese Weise lässt sich der Massenstrommesser zur Messung und/oder Steuerung eines Kraftstoffstromes zu mindestens einem Einspritzventil verwenden. Weiterhin lässt sich auch der Einspritzbeginn und/oder das Einspritzende und/oder eine Anspritzdauer auf diese Weise ermitteln, ohne unmittelbar auf die Dynamik von Baukomponenten der Injektoren zurückgreifen zu müssen. Aufgrund der möglichen kleinen Abmessungen lässt sich der erfindungsgemäße Massenstrommesser insbesondere auch an kleinen Düsenöffnungen einsetzen, ohne dadurch die Wirkungsweise der hydraulischen Vorrichtungen zu beeinträchtigen. Weiterhin erfordert der erfindungsgemäße Massenstrommesser keine aufwändigen elektronischen Auswerte- und Kalibrationsverfahren und -Vorrichtungen. Der Auswerte- und Kalibrationsaufwand ist aufgrund des einfachen und direkten Zusammenhangs zwischen dem elektrisch gemessenen Ladungsstrom (in Ampere) und dem Massenstrom (in kg/s) gering. Aufgrund dieser direkten Wirkungsweise entfällt üblicherweise auch der Aufwand algorithmischer Modelle in der Software elektronischer Motorsteuerungsgeräte, mit denen bei herkömmlichen Systemen die eingespritzte Kraftstoffmasse aus anderen Größen indirekt erschlossen werden muss.

### Zeichnung

Anhand der Zeichnung wird die Erfindung nachstehend näher erläutert.

### Es zeigt:

- Figur 1A: einen Massenstrommesser mit zwei Elektroden in Reihenanordnung;
- Figur 1B: eine zur Figur 1A alternative Ausführungsform mit im Wandmaterial ausgeführter Stromabwärts-Elektrode;
- Figur 2: einen Massenstrommesser in Laufzeitanordnung; und
- Figur 3: zwei Massenstrommesser in Kondensatoranordnung.

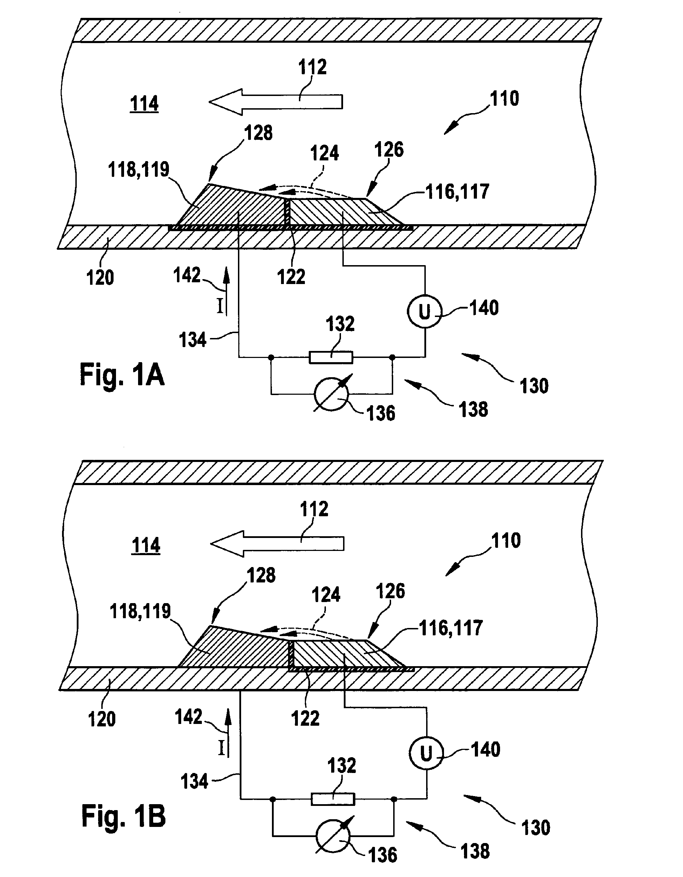

In Figur 1 ist ein erfindungsgemäßer Massenstrommesser 110 in einer Ausführung in Reihenanordnung dargestellt. Der Massenstrommesser 110 dient zur Messung eines mit einer Hauptströmungsrichtung 112 strömenden fluiden Mediums 114. Der Massenstrommesser 110 weist eine erste Elektrode 116 und eine zweite Elektrode 118 auf, welche auf eine Strömungsrohrwand 120 eines Strömungsrohres, durch welches das fluide Medium 114 strömt, aufgebracht sind. Die erste Elektrode 116 und die zweite Elektrode 118 sind dabei in Hauptströmungsrichtung 112 in Reihenanordnung angeordnet, so dass die erste Elektrode 116 als Stromaufwärts-Elektrode 117 fungiert, und die zweite Elektrode 118 als Stromabwärts-Elektrode 119. Die beiden Elektroden 116, 118 sind durch eine elektrische Isolation 122 voneinander und von der Strömungsrohrwand 120 getrennt und elektrisch isoliert.

Die Elektroden 116, 118 sind, wie oben beschrieben, derart gewählt, dass diese Elektrodenmaterialien aufweisen, welche gegenüber dem fluiden Medium 114 unterschiedliche triboelektrische Eigenschaften aufweisen. Dabei sei in diesem Ausführungsbeispiel angenommen, dass die Stromaufwärts-Elektrode 116 gegenüber dem strömenden Medium 114 als elektrischer Donator wirkt, also Elektronen an dieses abgibt, wobei die Stromabwärts-Elektrode 118 als elektrischer Akzeptor wirkt, also Elektronen von diesem aufnimmt. Dementsprechend bildet sich zwischen den Elektroden 116, 118 ein elektrisches Feld mit den elektrischen Feldlinien 124 von der Stromaufwärts-Elektrode 116 zur Stromabwärts-Elektrode 118 aus. Zur Auswahl der Elektrodenmaterialien wird die bekannte relative triboelektrische Polarität ausgenutzt. Eine Auflistung einiger bekannter Materialbeispiele und deren Anordnung zu einer phänomenologischen triboelektrischen Reihe ist beispielhaft in Tabelle 1 dargestellt. Dabei sind Donatoren in der Tabelle 1 oben angeordnet, wohingegen Akzeptoren sich in der Tabelle weiter unten befinden. Die Polaritäten der für die Erfindung bedeutsamen metallischen und nicht-metallischen Werkstoffe einerseits sowie der eingesetzten fluiden Medien 114, wie zum Beispiel Wasser, Öl und/oder Kraftstoff, ist andererseits bekannt. So sei in diesem Ausführungsbeispiel gemäß Figur 1A angenommen, dass es sich bei dem fluiden Medium 114 um Kraftstoff handelt. So kann beispielsweise als erstes Elektrodenmaterial der ersten Elektrode 116 Glas, Glimmer, Nylon oder Blei eingesetzt werden, also ein Donatormaterial gemäß der Auflistung in Tabelle 1. Als zweites Elektrodenmaterial der zweiten Elektrode 118 kann beispielsweise Teflon, Silizium (wobei eine p-Dotierung die Akzeptoreigenschaften verbessert), Polyethylen oder Plexiglas gewählt werden, also ein Akzeptormaterial gemäß Tabelle 1. Die Elektrodenmaterialien sind dabei derart gewählt, dass sie einerseits hohen Strömungsgeschwindigkeiten und Drücken standhalten und andererseits eine signifikante triboelektrische Distanz zum fluiden Medium 114 aufweisen, damit eine ausreichende Ladungstrennung zustande kommt. Die elektrische Isolation 122 ist in diesem Ausführungsbeispiel derart gewählt, dass diese ein triboelektrisch neutrales Material aufweist, beispielsweise Mylar, Hartgummi oder synthetischen Gummi, also Materialien, die in der tribologischen Reihe gemäß Tabelle 1 in der Mitte angeordnet sind. Die genannten Materialbeispiele eignen sich insbesondere für den Einsatz in hydraulischen Hochdrucksystemen.

Die Elektroden 116, 118 sind in diesem Ausführungsbeispiel von ihrer Formgestaltung her mit Strömungsquetschkanten 126, 128 versehen. Dabei ragt die an der zweiten Elektrode 118 ausgebildete stromabwärts gelegene Quetschkante weiter in das fluide Medium 114 hinein, weist also einen höheren Abstand von der Strömungsrohrwand 120 auf, als die stromaufwärts gelegene Quetschkante 126, welche an der ersten Elektrode 116 ausgebildet ist. Durch diese "Quetschung" der Strömung des fluiden Mediums 114 wird die triboelektrische Ladungstrennung an den Elektroden 122, 124 zusätzlich begünstigt, da zum einen die elektrischen Feldlinien 124 nun nahezu parallel zur Hauptströmungsrichtung 112 verlaufen. Zum anderen bewirkt die "Quetschung" der Strömung leichte Temperaturerhöhungen im fluiden Medium 114 im Bereich der Elektroden 116, 118, wodurch die triboelektrische Ladungstrennung zusätzlich verstärkt wird. Weiterhin sind die Elektroden 116, 118 derart ausgestaltet, dass sich eine Erosion kaum bemerkbar macht.

Der Massenstrommesser 110 gemäß dem Ausführungsbeispiel in Figur 1A weist weiterhin eine Ladungserfassungsvorrichtung 130 zum Erfassen eines Ladungsunterschieds zwischen der ersten Elektrode 116 und der zweiten Elektrode 118 auf. Im Gegensatz zu den aus dem Stand der Technik bekannten Vorrichtungen mit Mono-Elektroden ist bei dem erfindungsgemäßen Massenstrommesser 110 jedoch diese Ladungserfassungsvorrichtung 130 vergleichsweise einfach ausgestaltet. So weist diese Ladungserfassungsvorrichtung 130 im Wesentlichen einen Messwiderstand 132 auf, welcher in eine elektrische Verbindung 134 zwischen der ersten Elektrode 116 und der zweiten Elektrode 118 eingebracht ist. Mittels eines Spannungsmessgerätes 136, welches die über dem Messwiderstand 132 abfallende Spannung erfasst, kann somit der zwischen der ersten Elektrode 116 und der zweiten Elektrode 118 durch die elektrische Verbindung 134 fließende Rekombinationsstrom erfasst werden. Messwiderstand 132 und Spannungsmessgerät 136 wirken somit als Strommessvorrichtung 138. Wie oben beschrieben, lässt sich aus diesem Rekombinationsstrom unmittelbar auf die Strömungsgeschwindigkeit des fluiden Mediums 114 zurückschließen.

Die Ladungsübertragung zwischen den Elektroden 116, 118 und dem fluiden Medium 114 kann, wie in Figur 1A gezeigt, durch eine elektrische Vorspannung unterstützt werden. Zu diesem Zweck weist der Massenstrommesser 110 in dem Ausführungsbeispiel gemäß Figur 1A eine Vorspannungseinrichtung 140 auf, welche hier als einfache Spannungsquelle ausgestaltet ist. Bei der oben beschriebenen Wahl der Elektrodenmaterialien der Elektroden 116, 118 ist es, um die Donatorwirkung der ersten Elektrode 116 und die Akzeptorwirkung der zweiten Elektrode 118 zu erhöhen, von Vorteil, die Vorspannungseinrichtung 140 so zu wählen, dass die erste Elektrode 116, also in diesem Ausführungsbeispiel die Donatorelektrode, mit einem gegenüber der zweiten Elektrode 118 (also hier der Akzeptorelektrode) negativen Vorspannungspotential beaufschlagt wird. Die Vorspannung der Elektroden kann in Abhängigkeiten von den Materialeigenschaften und der Kapazität der Elektrodenanordnung beispielsweise zwischen 10 V und 100 V liegen.

Der Messwiderstand 132 sollte insgesamt wesentlich größer sein als die Innenwiderstände der Elektroden 116, 118, also beispielsweise mindestens 100 kOhm. Im Falle von elektrisch isolierenden Elektrodenmaterialien tritt dabei jedoch das Problem auf, dass der Innenwiderstand der Elektroden 116, 118 so hoch wird, dass Ladungen nicht über die Messwiderstände 132 fließen. In diesem Fall kann eine elektrische Kontaktierung auf die Elektrodenoberfläche herausgeführt werden, beispielsweise in Form einer Filament- oder Lamellenstruktur aus triboelektrisch neutralem, leitenden Material (beispielsweise Kupfer, Messing, Aluminium oder Stahl). Auf diese Weise können Ladungen von den isolierenden Elektrodenoberflächen effizient abgeführt und gemessen werden, insbesondere wenn die Lamellenstruktur "Finger" aufweist, die so dicht gelagert sind, dass Ladungen unter Überwindung lediglich kleiner Driftstrecken auf der isolierenden Elektrodenoberfläche zu den leitenden Fingern wandern können, von wo aus sie dann abgeführt werden.

Neben dem in Figur 1A dargestellten Verfahren zur Erfassung der Ladung lassen sich auch andere, dem Fachmann bekannte Verfahren einsetzen. So kann beispielsweise alternativ oder zusätzlich auch ein Ladungskompensationsverfahren oder ein Stromkompensationsverfahren eingesetzt werden.

In Figur 1B ist eine zu Figur 1A alternative Ausführung eines Massenstrommessers 110 dargestellt. In diesem Ausführungsbeispiel ist die zweite Elektrode 118 nicht gegenüber der Strömungsrohrwand 120 elektrisch isoliert. Die zweite Elektrode 118 ist somit leitend mit der Strömungsrohrwand 120, welche in diesem Ausführungsbeispiel aus leitendem Material gebildet ist, verbunden. Strömungsrohrwand 120 und zweite Elektrode 118 sind jedoch, wie auch in Figur 1A, durch eine elektrische Isolation 122 elektrisch gegenüber der ersten Elektrode 116 isoliert. Wie auch im Ausführungsbeispiel gemäß Figur 1A wird somit das fluide Medium 114 an der ersten Elektrode 116 negativ aufgeladen, wobei an der zweiten Elektrode 118 anschließend eine elektrische Rekombination stattfindet, so dass insgesamt von der ersten Elektrode 116 zur zweiten Elektrode 118 ein Rekombinationsstrom I (mit Bezugsziffer 142 bezeichnet) fließt, wie auch in Figur 1A. Der Rekombinationsstrom 142 wird mittels der Ladungserfassungsvorrichtung 130 gemessen, woraus sich auf die Strömungsgeschwindigkeit des fluiden Mediums 114 und somit aus der bekannten Geometrie des Strömungsrohres auf den Massenstrom des fluiden Mediums 114 schließen lässt.

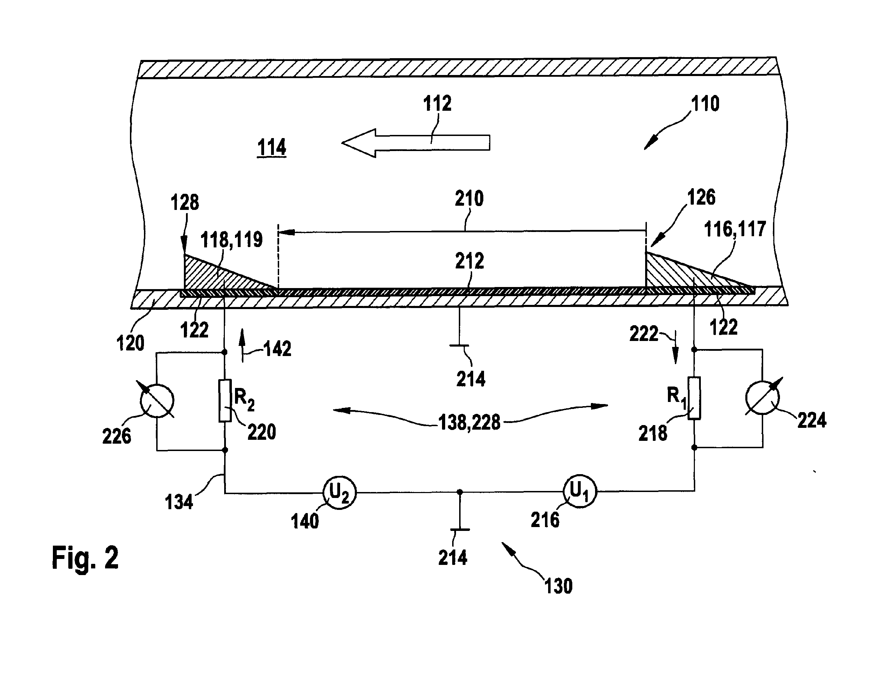

In Figur 2 ist eine zu den Figuren 1A und 1B alternative Ausgestaltung eines Massenstrommessers 110 in einer Laufzeitanordnung dargestellt. Wiederum weist der Massenstrommesser 110 eine erste Elektrode 116 als Stromaufwärts-Elektrode 117 und eine zweite Elektrode 118 als Stromabwärts-Elektrode 119 auf, welche in diesem Ausführungsbeispiel dreieckförmig mit Quetschkanten 126, 128 und getrennt durch eine Driftstrecke 210 ausgebildet sind. Die Elektroden 116, 118 können grundsätzlich aus denselben Elektrodenmaterialien wie im Ausführungsbeispiel gemäß Figur 1A ausgestaltet sein, so dass beispielsweise die erste Elektrode 116 als Donator und die zweite Elektrode 118 als Akzeptor gegenüber dem fluiden Medium 114 wirkt. Die erste Elektrode 116 und die zweite Elektrode 118 sind jeweils durch elektrische Isolationen 122 gegenüber der Strömungsrohrwand 120, welche wiederum aus leitfähigem Material (zum Beispiel Edelstahl) besteht, getrennt. Im Bereich der Driftstrecke 210 ist die Strömungsrohrwand 120 mit einem triboelektrisch neutralen Material 212 (z. B. Mylar oder synthetischer Gummi), welches elektrisch isolierend ist, ausgekleidet, damit die Ladungsströmung möglichst unbeeinflusst durch Rekombination, Polarisationsladungen oder Wandhaftung zur Stromabwärts-Elektrode 118 gelangt. Günstig ist eine Ausgestaltung des Strömungsrohrs im Bereich der Driftstrecke 210 dergestalt, dass das Strömungsrohr in diesem Bereich zylindrisch ist, so dass beispielsweise eine weitgehend laminare, homogene Strömung zwischen den Elektroden 116, 118 zustande kommt.

Die Strömungsrohrwand 120 ist mit einer elektrischen Masse 214 verbunden. Weiterhin weist der Massenstrommesser 110 in diesem Ausführungsbeispiel wiederum eine Ladungserfassungsvorrichtung 130 auf. Diese Ladungserfassungsvorrichtung 130 weist ihrerseits wiederum, wie auch in den Figuren 1A und 1B, eine elektrische Verbindung 134 zwischen den Elektroden 116, 118 auf. Diese elektrische Verbindung 134 ist ihrerseits mittig mit der elektrischen Masse 214 verbunden, wobei angenommen sei, dass diese elektrische Masse 214 identisch mit der oben beschriebenen Masse 214 ist, mit welcher die Strömungsrohrwand 120 verbunden ist. Wiederum weist die Ladungserfassungsvorrichtung 130 weiterhin eine Vorspannungseinrichtung 140 in Form einer Spannungsquelle auf, welche den bereits anhand Figur 1A beschriebenen Effekt auf eine triboelektrische Massentrennung hat.

Daneben weist die Ladungserfassungsvorrichtung 130 jedoch eine weitere Spannungsquelle in Form einer Pulsvorrichtung 216 auf. Diese Pulsvorrichtung 216 erzeugt einen elektrischen Spannungspuls, welcher sich der (beispielsweise konstanten) Vorspannung durch die Vorspannungseinrichtung 140 überlagert. Durch diesen Spannungspuls wird beispielsweise die Stromaufwärts-Elektrode 117 kurzfristig zusätzlich aufgeladen, beispielsweise durch einen Rechteck-Puls. Dementsprechend erfolgt an dieser Stromaufwärts-Elektrode 117 eine kurzfristig verstärkte lokale triboelektrische Aufladung des fluiden Mediums 114. Diese elektrische Aufladung wird von der Strömung des fluiden Mediums 114 entlang der Driftstrecke 210 zur Stromabwärts-Elektrode 118 mitgenommen. Dort liegt zum Zeitpunkt des Eintreffens dieser Ladungen vorzugsweise wieder eine konstante elektrische Spannung entsprechender Polarität an, so dass durch Rekombination ein Strompuls in der elektrischen Verbindung 134 hervorgerufen wird, wobei das fluide Medium 114 entladen wird.

Zum Zwecke der Erfassung der verschiedenen Ströme und der zeitlichen Verläufe dieser Ströme weist der Massenstrommesser 110 gemäß dem Ausführungsbeispiel in Figur 2 wiederum eine Strommessvorrichtung 138 auf. Diese Strommessvorrichtung weist jeweils einen ersten Messwiderstand R₁ (Bezugsziffer 218) und einen zweiten Messwiderstand R₂ (Bezugsziffer 220) auf, wobei der Strom 222 durch den ersten Messwiderstand 218 mittels eines ersten Spannungsmessgeräts 224 erfasst werden kann, und der Rekombinationsstrom 142 durch den zweiten Messwiderstand 220 mittels eines zweiten Spannungsmessgeräts 226, welches jeweils den Spannungsabfall über diesen Messwiderständen 218, 220 erfasst. Mittels der Strommessvorrichtung 138 wird eine zeitaufgelöste Messung durchgeführt, so dass die Strommessvorrichtung 138 gleichzeitig als Laufzeitmessungsvorrichtung 228 wirkt. So wird zunächst ein durch die Pulsvorrichtung 216 erzeugter Spannungspuls (oder analog ein Puls im Ladestrom 222) erfasst, wobei angenommen sei, dass der zeitliche Verlauf der Spannung U₁ von (t) den Spannungspuls zum Zeitpunkt T aufweist. Aufgrund der Drift wird im Rekombinationsstrom 142 durch das zweite Spannungsmessgerät 226 zum Zeitpunkt T + τ ein Strompuls gemessen. Aus der bekannten Länge der Driftstrecke 210 und der gemessenen zeitlichen Verzögerung τ zwischen dem Spannungspuls und dem Strompuls lässt sich nun leicht eine Geschwindigkeit der Strömung des fluiden Mediums 114 in der Nähe der Strömungsrohrwand 120 berechnen. Die Messgenauigkeit der Laufzeitanordnung gemäß Figur 2 wird durch Ladungsdiffusion oder - rekombination, beispielsweise an dissoziierten Ionen (zum Beispiel in Wasser) nicht wesentlich beeinträchtigt, da sich solche Prozesse makroskopisch nicht oder nur wenig auf das Strömungsverhalten des Fluids auswirken und lediglich zu einer Abschwächung der Impulshöhe des Rekombinationsstroms 142 führen. Somit kann auch die Massenströmung von elektrisch (schwach) leitfähigen fluiden Medien 114 genau bestimmt werden.

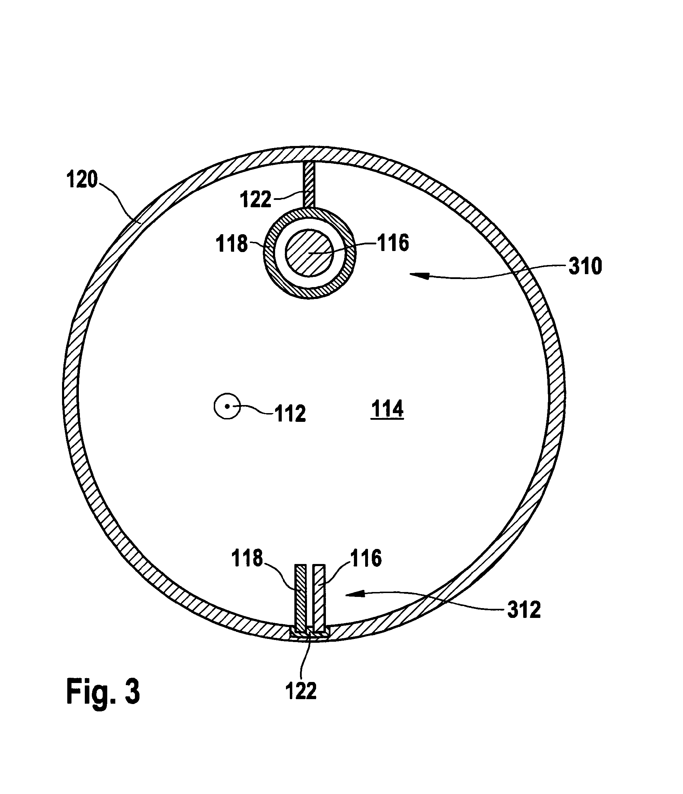

In Figur 3 ist jeweils ein Ausführungsbeispiel eines als Zylinderkondensator ausgestalteten Massenstrommessers 310 und eines als Plattenkondensator ausgestalteten Massenstrommessers 312 dargestellt. Beide Massenstrommesser 310, 312 sind in diesem Ausführungsbeispiel in ein Strömungsrohr mit einer Strömungsrohrwand 120 mit kreisförmigem Querschnitt eingebracht. Beide Massenstrommesser 310, 312 sind sogenannte Parallelanordnungen und weisen jeweils eine erste Elektrode 116 und eine zweite Elektrode 118 auf, deren Wandungen parallel zur Hauptströmungsrichtung 112 ausgebildet sind. Die Hauptströmungsrichtung 112 ist in diesem Ausführungsbeispiel symbolisch dargestellt, wobei angenommen sei, dass das fluide Medium 114 aus der Zeichenebene herausströmt. In beiden Massenstrommessern 310, 312 liegen jeweils die Elektroden 116 und 118 bezüglich der Hauptströmungsrichtung 112 auf gleicher Höhe im fluiden Medium 114.

Dabei ist der erste Massenstrommesser 310, welcher in Figur 3 oben dargestellt ist, als Zylinderkondensator ausgestaltet, wobei in diesem Ausführungsbeispiel die erste Elektrode 116 die Innenelektrode bildet und die zweite Elektrode 118 die Außenelektrode. Die Halterung dieser Elektroden 116, 118 sowie eine elektrische Kontaktierung dieser Elektroden 116, 118 ist in diesem Ausführungsbeispiel nicht dargestellt. Die Elektroden 116, 118 werden jeweils durch elektrische Isolationen 122 gehaltert. Entsprechend weist der in Figur 3 unten dargestellte Massenstrommesser 312 zwei planparallele Plattenelektroden 116, 118 auf, welche ihrerseits durch elektrische Isolation 122 von der Strömungsrohrwand 120 getrennt sind. Auch hierbei ist eine elektrische Kontaktierung der Elektroden 116, 118 und die entsprechende Ladungserfassungsvorrichtung 130 nicht dargestellt. Ist, wie oben beschrieben, die relative Stellung der Elektrodenmaterialien der Elektroden 116, 118 zum fluiden Medium 114 in der triboelektrischen Reihe verschieden, so ruft die Strömungsreibung an den Elektroden 116, 118 verschiedene Ladungen Q₁ und Q₂ auf den Elektroden 116 beziehungsweise 118 hervor. Bezeichnet man mit C_{E} die Kapazität der Elektrodenanordnungen, so fällt zwischen den Elektroden 116, 118 eine Spannung U_{E} = (Q₁ - Q₂)/C_{E_}ab, die mit einer Ladungserfassungsvorrichtung 130 analog der obigen Beschreibung oder gemäß den im oben beschriebenen Stand der Technik offenbarten Vorrichtungen erfasst werden kann. Ladungs- und/oder Spannungskompensations-Messverfahren sind ebenfalls denkbar. Die Parallelanordnungen gemäß der Figur 3 eignen sich weiterhin auch zur Bestimmung der elektrischen Leitfähigkeit und der relativen dielektrischen Permittivität des fluiden Mediums, insbesondere im ruhenden Zustand, d.h. bei Strömungsgeschwindigkeit 0. Eine Zunahme des Abstandes zwischen den Elektroden 116, 118 verringert die Kapazität C_{E} der Elektrodenanordnung und erhöht somit die Spannung U_{E}.

Abschließend sei noch darauf hingewiesen, dass die beschriebenen Ausführungsbeispiele gemäß den Figuren 1A, 1B, 2 und 3 offen im Strömungskanal liegen. Alternativ oder zusätzlich kann auch ein Teil der Strömung des fluiden Mediums 114 durch einen Strömungsnebenkanal (Bypass) geführt werden, dessen Länge und Querschnitt so beschaffen sind, dass die Strömungsverhältnisse unter den vorherrschenden Betriebsparametern (zum Beispiel Druck, Temperatur, Reynolds-Zahl und Strömungsgeschwindigkeit) im Bereich der Elektroden 116, 118 sowie im Bereich der gegebenenfalls vorhandenen Driftstrecke 210 weitgehend laminar sind.

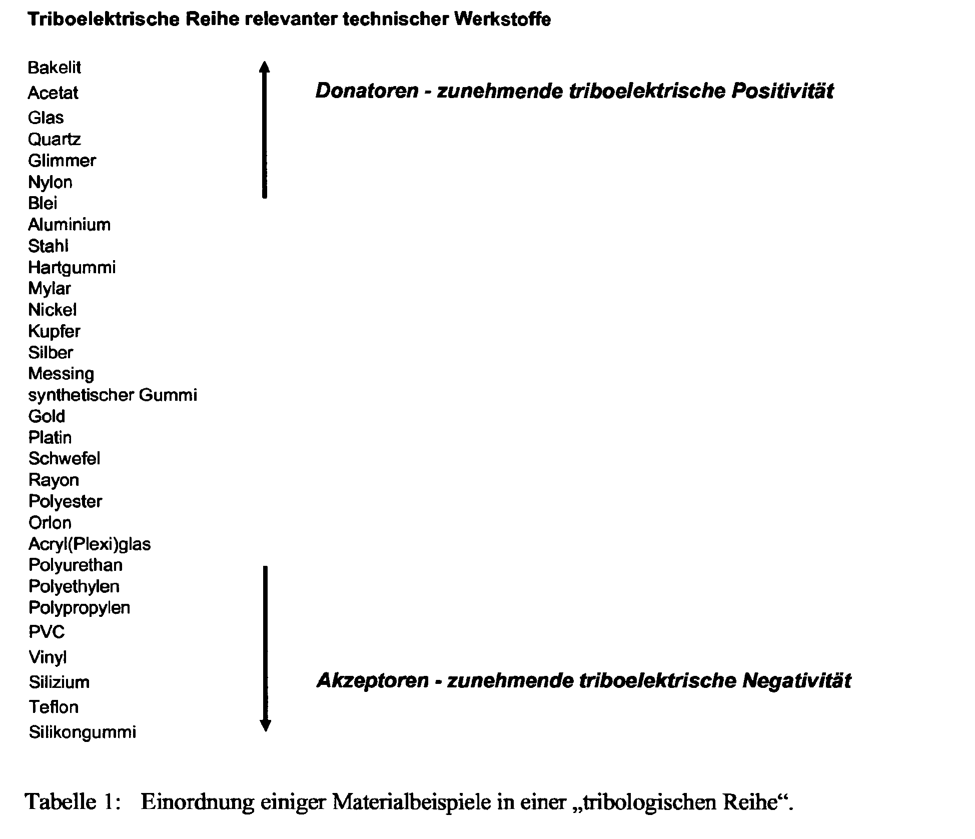

## Patentansprüche

1. Massenstrommesser (110; 310; 312) zur Messung eines Massenstromes eines mit einer Hauptströmungsrichtung (112) strömenden fluiden Mediums (114), insbesondere eines fluiden Mediums (114) mit dielektrischen Eigenschaften, aufweisend mindestens eine erste Elektrode (116) und mindestens eine zweite Elektrode (118), wobei die mindestens eine erste Elektrode (116) zumindest teilweise von dem fluiden Medium (114) überströmt wird, **dadurch gekennzeichnet, dass** die mindestens eine zweite Elektrode (118) zumindest teilweise von dem fluiden Medium (114) überströmt wird und dass die mindestens eine erste Elektrode (116) mindestens ein erstes Elektrodenmaterial und die mindestens eine zweite Elektrode (118) mindestens ein zweites Elektrodenmaterial aufweist, wobei das mindestens eine erste Elektrodenmaterial infolge triboelektrischer Effekte als elektrischer Donator wirkt, indem durch Strömungsreibung Elektronen von der ersten Elektrode auf das fluide Medium übertragen werden, und wobei das mindestens eine zweite Elektrodenmaterial infolge triboelektrischer Effekte als elektrischer Akzeptor wirkt, indem durch Strömungsreibung Elektronen vom fluiden Medium auf die mindestens eine zweite Elektrode übergehen, und wobei der Massenstrommesser (110; 310; 312) weiterhin mindestens eine Ladungserfassungsvorrichtung (130) zur Erfassung eines Ladungsunterschiedes zwischen der mindestens einen ersten Elektrode (116) und der mindestens einen zweiten Elektrode (118) aufweist.

2. Massenstrommesser (110; 310; 312) gemäß Anspruch 1, **dadurch gekennzeichnet, dass** die mindestens eine Ladungserfassungsvorrichtung (130) den Ladungsunterschied zwischen der mindestens einen ersten Elektrode (116) und der mindestens einen zweiten Elektrode (118) mittels einer der folgenden Messvorrichtungen erfasst: einer Strommessvorrichtung (138), die mindestens einen Strom (142, 22) zwischen der mindestens einen ersten Elektrode (116) und der mindestens einen zweiten Elektrode (118) misst oder einer Messvorrichtung, die einen Rekombinationsstrom misst, der durch von dem strömenden Medium transportierte und an der zweiten Elektrode rekombinierte elektrische Ladungen hervorgerufen wird.

3. Massenstrommesser (110; 310; 312) gemäß einem der beiden vorhergehenden Ansprüche, **dadurch gekennzeichnet, dass** die mindestens eine erste Elektrode (116) und die mindestens eine zweite Elektrode (118) durch mindestens ein relativ zum Strömungsmedium triboelektrisch neutrales Material (212) voneinander getrennt sind.

4. Massenstrommesser (110; 310; 312) gemäß einem der vorhergehenden Ansprüche, **dadurch gekennzeichnet, dass** das mindestens eine erste Elektrodenmaterial und das mindestens eine zweite Elektrodenmaterial entgegengesetzte triboelektrische Polarität gegenüber dem fluiden Medium (114) aufweisen.

5. Massenstrommesser (110; 310; 312) gemäß dem vorhergehenden Anspruch, **dadurch gekennzeichnet, dass** das mindestens eine erste Elektrodenmaterial oder das mindestens eine zweite Elektrodenmaterial p-dotiertes Silizium aufweist.

6. Massenstrommesser (110; 310; 312) gemäß einem der vorhergehenden Ansprüche, **dadurch gekennzeichnet, dass** mindestens ein Elektrodenmaterial isolierend ist, wobei zur Kontaktierung des isolierenden Elektrodenmaterials eine leitende, triboelektrisch neutrale Filament- und/oder Lamellenstruktur auf einer Oberfläche des isolierenden Elektrodenmaterials angeordnet ist.

7. Massenstrommesser (110) gemäß einem der vorhergehenden Ansprüche, **dadurch gekennzeichnet, dass** mindestens eine Stromaufwärts-Elektrode (117) der mindestens einen ersten Elektrode (116) stromaufwärts bezüglich der Hauptströmungsrichtung (112) zu mindestens einer Stromabwärts-Elektrode (119) der mindestens einen zweiten Elektrode (118) angeordnet ist.

8. Massenstrommesser (110) gemäß dem vorhergehenden Anspruch, **dadurch gekennzeichnet, dass** das fluide Medium (114) durch ein Strömungsrohr mit einer Strömungsrohrwand (120) strömt, wobei die mindestens eine Stromaufwärts-Elektrode (117) und die mindestens eine Stromabwärts-Elektrode (119) nahe der Strömungsrohrwand (120) angeordnet sind, wobei die mindestens eine Stromabwärts-Elektrode (119) weiter in den Strömungskanal hineinragt als die mindestens eine Stromaufwärts-Elektrode (117).

9. Massenstrommesser (110; 310; 312) gemäß einem der vorhergehenden Ansprüche, **dadurch gekennzeichnet, dass** die mindestens eine Ladungserfassungsvorrichtung (130) mindestens eine Vorspannungseinrichtung (140) aufweist, die eine elektrische Vorspannung zwischen der mindestens einen ersten Elektrode (116) und der mindestens einen zweiten Elektrode (118) generiert.

10. Massenstrommesser (110; 310; 312) gemäß einem der vorhergehenden Ansprüche; **dadurch gekennzeichnet, dass** die mindestens eine Ladungserfassungsvorrichtung (130) mindestens eine Pulsvorrichtung (216) zur Beaufschlagung der mindestens einen ersten Elektrode (116) und/oder der mindestens einen zweiten Elektrode (118) mit einer zeitlich veränderlichen Spannung, insbesondere einer Pulsspannung, aufweist.

11. Massenstrommesser (110; 310; 312) gemäß dem vorhergehenden Anspruch, **gekennzeichnet durch** mindestens eine Laufzeitmessungsvorrichtung (228) zur Erfassung einer zeitlichen Veränderung des Ladungsunterschiedes zwischen der mindestens einen ersten Elektrode (116) und der mindestens einen zweiten Elektrode (118).

12. Massenstrommesser (310; 312) gemäß einem der vorhergehenden Ansprüche, **dadurch gekennzeichnet, dass** die mindestens eine erste Elektrode (116) und die mindestens eine zweite Elektrode (118) in mindestens einer Kondensatoranordnung, insbesondere einer Plattenkondensatoranordnung und/oder einer Zylinderkondensatoranordnung, angeordnet sind.

13. Verwendung eines Massenstrommessers (110; 310; 312) gemäß einem der vorhergehenden Ansprüche zur Messung und/oder Steuerung eines Kraftstoffstromes zu mindestens einem Einspritzventil zum Einspritzen von Kraftstoff in einen Brennraum einer Verbrennungskraftmaschine.

14. Verwendung gemäß dem vorhergehenden Anspruch, **dadurch gekennzeichnet, dass** aus dem zeitlichen Verlauf des Kraftstoffstromes mindestens ein Einspritzbeginn und/oder mindestens ein Einspritzende und/oder mindestens eine Anspritzdauer des Einspritzens ermittelt wird.

15. Verwendung gemäß einem der beiden vorhergehenden Ansprüche, wobei zusätzlich mindestens eine der folgenden Größen bestimmt wird: eine elektrische Leitfähigkeit des fluiden Mediums (114); eine relative dielektrische Permittivität des fluiden Mediums (114).

## Claims

1. Mass flowmeter (110; 310; 312) for measuring a mass flow of a fluid medium (114) flowing with a main direction of flow (112), in particular a fluid medium (114) with dielectric properties, having at least one first electrode (116) and at least one second electrode (118), the fluid medium (114) at least partially flowing over the at least one first electrode (116), **characterized in that** the fluid medium (114) at least partially flows over the at least one second electrode (118), and **in that** the at least one first electrode (116) has at least one first electrode material and the at least one second electrode (118) has at least one second electrode material, the at least one first electrode material acting as an electrical donor on account of triboelectric effects by virtue of electrons being transferred from the first electrode to the fluid medium as a result of flow friction, and the at least one second electrode material acting as an electrical acceptor on account of triboelectric effects by virtue of electrons passing from the fluid medium to the at least one second electrode as a result of flow friction, and the mass flowmeter (110; 310; 312) also having at least one charge detection apparatus (130) for detecting a charge difference between the at least one first electrode (116) and the at least one second electrode (118).

2. Mass flowmeter (110; 310; 312) according to Claim 1, **characterized in that** the at least one charge detection apparatus (130) detects the charge difference between the at least one first electrode (116) and the at least one second electrode (118) using one of the following measuring apparatuses: a current measuring apparatus (138), which measures at least one current (142, 22) between the at least one first electrode (116) and the at least one second electrode (118), or a measuring apparatus which measures a recombination current caused by electrical charges which are transported by the flowing medium and are recombined at the second electrode.

3. Mass flowmeter (110; 310; 312) according to either of the two preceding claims, **characterized in that** the at least one first electrode (116) and the at least one second electrode (118) are separated from one another by at least one material (212) which is triboelectrically neutral relative to the flow medium.

4. Mass flowmeter (110; 310; 312) according to one of the preceding claims, **characterized in that** the at least one first electrode material and the at least one second electrode material have opposite triboelectric polarities relative to the fluid medium (114).

5. Mass flowmeter (110; 310; 312) according to the preceding claim, **characterized in that** the at least one first electrode material or the at least one second electrode material has p-doped silicon.

6. Mass flowmeter (110; 310; 312) according to one of the preceding claims, **characterized in that** at least one electrode material is insulating, a conductive, triboelectrically neutral filament and/or lamellar structure being arranged on a surface of the insulating electrode material in order to make contact with the insulating electrode material.

7. Mass flowmeter (110) according to one of the preceding claims, **characterized in that** at least one upstream electrode (117) of the at least one first electrode (116) is arranged upstream of at least one downstream electrode (119) of the at least one second electrode (118) with respect to the main direction of flow (112).

8. Mass flowmeter (110) according to the preceding claim, **characterized in that** the fluid medium (114) flows through a flow tube with a flow tube wall (120), the at least one upstream electrode (117) and the at least one downstream electrode (119) being arranged close to the flow tube wall (120), the at least one downstream electrode (119) projecting further into the flow channel than the at least one upstream electrode (117).

9. Mass flowmeter (110; 310; 312) according to one of the preceding claims, **characterized in that** the at least one charge detection apparatus (130) has at least one biasing device (140) which generates an electrical bias between the at least one first electrode (116) and the at least one second electrode (118).

10. Mass flowmeter (110; 310; 312) according to one of the preceding claims, **characterized in that** the at least one charge detection apparatus (130) has at least one pulsing apparatus (216) for applying a temporally variable voltage, in particular a pulsed voltage, to the at least one first electrode (116) and/or the at least one second electrode (118).

11. Mass flowmeter (110; 310; 312) according to the preceding claim, **characterized by** at least one propagation time measurement apparatus (228) for detecting a temporal change in the charge difference between the at least one first electrode (116) and the at least one second electrode (118).

12. Mass flowmeter (310; 312) according to one of the preceding claims, **characterized in that** the at least one first electrode (116) and the at least one second electrode (118) are arranged in at least one capacitor arrangement, in particular a plate capacitor arrangement and/or a cylindrical capacitor arrangement.

13. Use of a mass flowmeter (110; 310; 312) according to one of the preceding claims to measure and/or control a flow of fuel to at least one injection valve for injecting fuel into a combustion chamber of an internal combustion engine.

14. Use according to the preceding claim, **characterized in that** at least one start of injection and/or at least one end of injection and/or at least one injection period is/are determined from the temporal profile of the flow of fuel.

15. Use according to either of the two preceding claims, at least one of the following variables additionally being determined: an electrical conductivity of the fluid medium (114); a relative dielectric permittivity of the fluid medium (114).

## Revendications

1. Débitmètre massique (110; 310; 312) destiné à mesurer le débit massique d'un fluide (114) qui s'écoule dans une direction principale d'écoulement (112), en particulier d'un fluide (114) à propriétés diélectriques,
lequel débitmètre présente au moins une première électrode (116) et au moins une deuxième électrode (118) ,
la ou les premières électrodes (116) étant au moins en partie submergées par le fluide (114),
**caractérisé en ce que**
la ou les deuxièmes électrodes (118) sont au moins partiellement submergées par le fluide (114),
**en ce que** la ou les premières électrodes (116) présentent au moins un premier matériau d'électrode et la ou les deuxièmes électrodes (118) au moins un deuxième matériau d'électrode,
**en ce que** le ou les premiers matériaux d'électrode assurent la fonction de donneurs électriques suite à des effets triboélectriques par le fait que le frottement d'écoulement transfère des électrons de la première électrode au fluide,
**en ce que** le ou les deuxièmes matériaux d'électrode assurent la fonction d'accepteurs électriques suite à des effets triboélectriques par le fait que le frottement d'écoulement transfère des électrons du fluide à la ou aux deuxièmes électrodes,
le débitmètre massique (110; 310; 312) présentant en outre au moins un dispositif (130) de détection de charge qui détecte une différence de charge entre la ou les premières électrodes (116) et la ou les deuxièmes électrodes (118).

2. Débitmètre massique (110; 310; 312) selon la revendication 1, **caractérisé en ce que** le ou les dispositifs (130) de détection de charge détectent la différence de charge entre la ou les premières électrodes (116) et la ou les deuxièmes électrodes (118) au moyen d'un des dispositifs de mesure suivants :
un dispositif de mesure de courant (138) qui mesure au moins un courant (142, 22) entre la ou les premières électrodes (116) et la ou les deuxièmes électrodes (118) ou
un dispositif de mesure qui mesure le courant de recombinaison qui résulte du transport des charges électriques par le fluide en écoulement et de leur recombinaison sur la deuxième électrode.

3. Débitmètre massique (110; 310; 312) selon l'une des revendications précédentes, **caractérisé en ce que** la ou les premières électrodes (116) et la ou les deuxièmes électrodes (118) sont séparées l'une de l'autre par au moins un matériau (212) triboélectriquement neutre par rapport au fluide en écoulement.

4. Débitmètre massique (110; 310; 312) selon l'une des revendications précédentes, **caractérisé en ce que** le ou les premiers matériaux d'électrode et le ou les deuxièmes matériaux d'électrode ont des potentiels triboélectriques opposés par rapport au fluide (114).

5. Débitmètre massique (110; 310; 312) selon la revendication précédente, **caractérisé en ce que** le ou les premiers matériaux d'électrode ou le ou les deuxièmes matériaux d'électrode présentent un silicium dopé positivement.

6. Débitmètre massique (110; 310; 312) selon l'une des revendications précédentes, **caractérisé en ce qu'**au moins un matériau d'électrode est isolant et **en ce qu'**une structure en filaments et/ou en lamelles neutre triboélectriquement et conductrice est placée sur une surface du matériau d'électrode isolant pour assurer le contact avec le matériau d'électrode isolant.

7. Débitmètre massique (110) selon l'une des revendications précédentes, **caractérisé en ce qu'**au moins une électrode amont (117) parmi la ou les premières électrodes (116) est disposée dans la direction principale d'écoulement (112) en amont d'au moins une électrode aval (119) parmi la ou les deuxièmes électrodes (118).

8. Débitmètre massique (110) selon la revendication précédente, **caractérisé en ce que** le fluide (114) s'écoule dans un tube d'écoulement qui présente une paroi tubulaire d'écoulement (120), la ou les électrodes amont (117) et la ou les électrodes aval (119) étant disposées à proximité de la paroi tubulaire d'écoulement (120), la ou les électrodes aval (119) s'enfonçant davantage dans le canal d'écoulement que la ou les électrodes amont (117).

9. Débitmètre massique (110; 310; 312) selon l'une des revendications précédentes, **caractérisé en ce que** le ou les dispositifs (130) de détection de charge présentent au moins un dispositif de précontrainte (140) qui crée une précontrainte électrique entre la ou les premières électrodes (116) et la ou les deuxièmes électrodes (118).

10. Débitmètre massique (110; 310; 312) selon l'une des revendications précédentes, **caractérisé en ce que** le ou les dispositifs (130) de détection de charge présentent au moins un dispositif pulsant (216) qui applique une tension variable dans le temps et en particulier une tension pulsée sur la ou les premières électrodes (116) et/ou sur la ou les deuxièmes électrodes (118).

11. Débitmètre massique (110; 310; 312) selon la revendication précédente, **caractérisé par** au moins un dispositif (228) de mesure de temps de parcours qui détecte une modification temporelle de la différence de charge entre la ou les premières électrodes (116) et la ou les deuxièmes électrodes (118).

12. Débitmètre massique (310; 312) selon l'une des revendications précédentes, **caractérisé en ce que** la ou les premières électrodes (116) et la ou les deuxièmes électrodes (118) sont disposées dans au moins un système de condensateur, en particulier un système de condensateur à plaques et/ou un système de condensateur cylindrique.

13. Utilisation d'un débitmètre massique (110; 310; 311) selon l'une des revendications précédentes pour la mesure et/ou la commande d'un écoulement de carburant vers au moins une soupape d'injection qui injecte du carburant dans une chambre de combustion d'un moteur à combustion interne.

14. Utilisation selon la revendication précédente, **caractérisée en ce qu'**à partir de la variation temporelle de l'écoulement de carburant, on détermine au moins le début et/ou au moins la fin et/ou au moins la durée de l'injection.

15. Utilisation selon l'une des revendications précédentes, dans laquelle au moins l'une des grandeurs suivantes et en outre déterminée : la conductivité électrique du fluide (114) et la permissivité diélectrique relative du fluide (114).
